# EUROPEAN PATENT SPECIFICATION

(11) **EP 3 329 131 B1**
(45) Date of publication and mention of the grant of the patent: **24.08.2022**
(21) Application number: 16831217.1
(22) Date of filing: 25.07.2016
(51) Int. Cl.: F16B 21/00, F16D 1/112, F16D 1/108, F16D 1/10, F16D 1/00

(54) **SHAFT COUPLER**
SCHAFTKOPPLER
COUPLEUR D'ARBRE

(30) Priority: 27.07.2015 US 201514810172
(43) Date of publication of application: 06.06.2018
(73) Proprietor: Newth, Gregory Lee, Montague, MA 01351 (US)
(72) Inventor: Newth, Gregory Lee, Montague, MA 01351 (US)
(74) Representative: FRKelly
(86) International application number: PCT/US2016/043949
(87) International publication number: WO 2017/019641

(56) References cited:
- WO-A1-2014/201007
- US-A- 2 473 388
- US-A- 2 693 370
- US-A- 2 693 379
- US-A- 2 980 456
- US-A- 4 385 849
- US-A- 4 595 383
- US-A1- 2002 164 205
- US-A1- 2007 017 072
- US-A1- 2007 031 184
- US-A1- 2010 122 718
- US-B2- 6 688 800

## Description

### TECHNICAL FIELD

The present invention relates to disengageable couplers, useful for shafts that transmit linear and rotary motion.

### BACKGROUND

Persons engaged in maintenance and repair of chimneys and other pipes and ducts have long used shafts, also called poles, comprised of coupled-together shaft segments, for a variety of applications. Shafts are provided in short sections to enable easy transport between jobs.

In one use, a mechanic uses tool such as a brush or a lifting device of the kind described in U.S. Pat. No. 9,027,977. The tool is attached to the end of a shaft and lowered into the chimney interior, which may be straight or crooked. In another use, a mechanic puts a flail-like cleaning tool on the shaft and inserts it into the lower part of a chimney or stovepipe, using a power tool to rotate the tool as it moves upwardly. In another use, a mechanic puts a flail or brush on the end of a shaft and runs it along an air duct or pipe, some of which have rather small diameters compared to a typical chimney, to remove deposits.

The prior art uses require good fit and stiffness of a shaft coupler. As a result, the shaft, and therefore, the coupler of the shaft segments, can be subjected to substantial torsional and longitudinal forces. Insofar as practical, it is desirable that a shaft comprised of segments behave as if it was a unitary structure.

Particularly during the course of chimney work it is common that soot deposits, masonry particulate, and other debris are agitated within the chimney and thus will contact any coupling. The coupling may also be subjected to water wetting during handling and use. Similar dirt and debris problems can be present during other uses.

Various kinds of couplers have been used to interconnect shaft pieces in the past. A familiar kind of prior art coupler comprises a male part and a female part: the male part has a spring loaded, radially-moving plunger (also called a button) which engages a hole or cutout in a mating female part, thereby to lock the two parts together. Generally, there has been a tendency for the plungers of prior art couplers to stick when being engaged, or insufficiently to resist unwanted disengagement, especially as wear of the coupler occurs over time.

U.S. Pat. No. 6,688,800 of Kresge describes a coupler which comprises a single snap-like plunger lock. UK Pat. 2500288 and UK Patent Application GB2509004, both of Russell, describe other couplers having single buttons.

WO 2014/201007 A1 of Gardus describes a two button shaft coupler comprising a first female end fitting and a second male fitting. Two buttons in the male fitting are pushed outwardly by a spring, the ends of which sets within a shallow recess in each button. Plastic end panels guide the fore-aft ends of the buttons and prevent the buttons from contacting each other when the buttons are pushed inwardly.

US Pat. No 2,693,379 of Rath describes a two button shaft coupler where the fittings have a rectangular cross section.

US Publication 2007/017072 A1 of Serio describes a single button shaft coupler where the female fitting has a combination of rounded and rectangular cross section that is received in the mating cavity of the male fitting.

US Publication 2007/031184 A1 of Baxstrom describes a two button shaft coupler where the male and female fittings have either round or square cross section. Each button has its own spring; the end of each spring presses against a central member in the middle of the female fitting.

US Publication 2002/164205 A1 of Kresge shows a single button shaft coupler where the button has a flat bottom and the end of the spring sets within a recess inside the female fitting.

A good coupler must be able to function well in engage and disengage in dirty environments, and resist inadvertent disengagement. Engagement and disengagement of a coupler - even when small in diameter, will desirably be easy, including for a person wearing gloves. A coupler should be strong in resisting forces in longitudinal shaft directions, and in torsional directions. A desirable coupler will have a plunger which will not twist or jamb, and which will function properly even if it becomes worn. Generally, it is hard, when a coupler is small in diameter to make a coupler which is strong, easy to engage and disengage, and durable. As described below, the present invention lends itself to small size coupler.

### BRIEF DESCRIPTION OF DRAWINGS

Fig. 1 is a perspective view of a coupler comprised of two fittings mated with each other.
Fig. 2 is a perspective side view of one of the fittings shown in Fig. 1.
Fig. 3 is a perspective view of the second of the fittings shown in Fig. 1.
Fig. 4 is a side view of the fitting shown in Fig. 2.
Fig. 5 is a side view of the fitting shown in Fig. 2 which is at a 90 degree angle to the view of Fig. 4.
Fig. 6 is a side view of the fitting shown in Fig. 3.
Fig. 7 is a side view of the fitting shown in Fig. 3 which is at a 90 degree angle to the view of Fig. 6.
Fig. 8 is a perspective view of a button.
Fig. 9 is a partial cross section showing how a button fits within the end of a fitting like that shown in Fig. 3.
Fig. 10 is a transverse cross section of the fitting shown in Fig. 6, showing the buttons and spring.
Fig. 11 is a transverse cross section like that of Fig. 10, showing the buttons pushed inwardly.
Fig. 12 is a lengthwise view, with a partial cross section, of the coupling shown in Fig. 1 along with parts of shafts which are connected by the coupling.
Fig. 13 is a view like that of Fig. 12, showing the buttons in depressed condition, so the two parts of the coupling might be disengaged by pulling them apart.
Fig. 14 is a lengthwise view of a coupling, with a partial cross section, showing how the buttons are installed during the manufacturing process.
Fig. 14A is a view like Fig. 13, showing an alternative way of installing the buttons.
Fig. 15 is a transverse cross section of male stub portion of the fitting shown in Fig. 2.
Fig. 16 is transverse cross section of the coupling shown in Fig. 12.
Fig. 17 is a lengthwise cross section of a one fitting of the two fittings which comprise a single button coupler.

### SUMMARY

The present disclosure provides a coupler as detailed in claim 1. Advantageous features are provided in dependent claims.

An object of the present invention is to provide a coupler for two shaft segments which overcome the drawbacks and satisfy the needs mentioned in the Background, including being useful when the coupler is small in diametrical dimension. A further object is to provide a coupler which has good longitudinal strength, good rotational strength, and good stiffness. A still further object is to provide a coupler with easy engagement, with resistance to unwanted disengagement, and with resistance to jamming that prevents disengagement, even when the coupler is coated with debris or worn.

In accord with the invention, a coupler preferably has two opposing side buttons. For smaller couplers particularly, the coupler may have one button. An embodiment of coupler comprises a first fitting and a second fitting. The first fitting has a proximal end shaped for attachment to a shaft piece, and an opposing distal end which is also called the male end. There is least one, preferably two, oblong buttons, are captured within a cavity of the distal end of the first fitting. The button(s) move outwardly under action of a compression spring which presses against the base of the button. The spring is at least partially within a cavity at the base of the button.

The second fitting of the coupler has a proximal end shaped for attachment to a second shaft piece, and a distal end, also called the female end, having a cavity with a lengthwise opening shaped to fit the male end of the first fitting, preferably with anti-rotation features such as one or more mating flats. When the fittings are mated, a spring within the first fitting urges the button(s) outwardly into an opening in the side of the cavity of the female end of the second fitting.

Each button is captured within the cavity of the male end of the first fitting by proximal and distal flanges. In preferred embodiments, the lengthwise end of each flange bears against a transverse planar surface within the cavity. And each button has opposing lengthwise planar sides which mate with opposing side planar surfaces within the cavity; those planar surfaces are parallel to the one or more flats on the exterior of the fitting. Thus the buttons have good resistance to torsional forces and lengthwise forces, in either direction.

In further accord with the invention, the first fitting has a cavity which has a wall at the distal end and an opening at the proximal end. The buttons are inserted into the cavity with the spring compressed wholly within the cavity in the base of the button. After the button(s) are put in position, a plug is inserted into the proximal end of the cavity to provide a transverse planar surface which guides the proximal end of the flange of the button.

A coupler of the present invention achieves the objects of the invention, and in particular, it is strong in resisting torsional and lengthwise forces, and is resistant to inadvertent disengagement due to the superior outward thrusting of button(s) by a large spring, which the invention enables. The coupler works reliably under adverse use conditions.

The foregoing and other features and advantages will be fully appreciated from the more detail description which follows and the associated drawings.

### DESCRIPTION

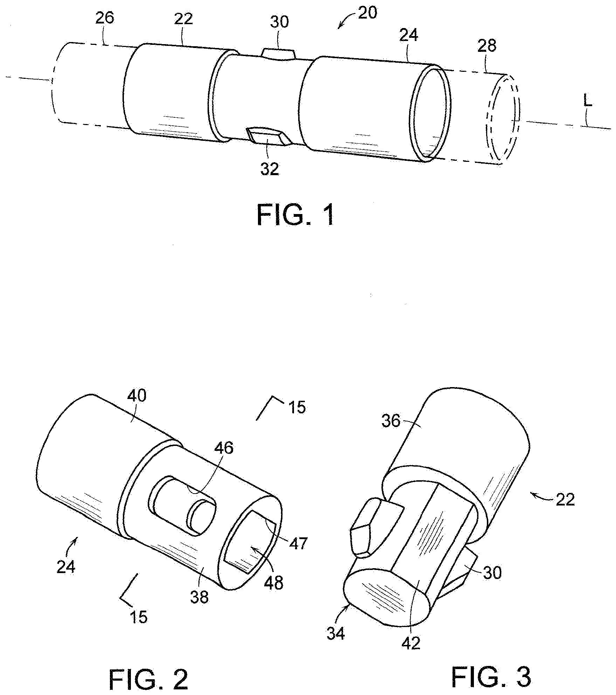

With reference to Fig. 1-3, an embodiment of coupler 20 comprises a first fitting 22 and a second fitting 24. The fittings are mated in Fig. 1, to form the coupler 20 that connects two shaft segments shown in phantom. The fittings are shown separately in Fig. 2 and Fig. 3. The coupler, and each portion or part thereof, has a length which lies along axis L. The coupler is preferably made of steel having a corrosion resisting plating, but may be made of other materials including stainless steel, aluminum and strong plastic.

The portion of each fitting 34, 38 which is furthest from a shaft being coupled is called the distal end. The distal ends those which engage each other when the fittings are mated. The proximal end of each fitting is that end which is furthest from the mating location. Because of how the distal ends mate, sometimes the first fitting is referred to as the male fitting having a male stub end, and the second fitting is referred to as the female fitting having a female stub end.

The first fitting 22 has a distal end 34 and an opposing proximal end 36 which is preferably cylindrical and which is shaped for attachment to the end of a shaft segment 26 shown in phantom in Fig. 1. The second fitting 24 has a distal end 38 with a cavity 48 shaped for receiving the male stub (distal) end 34 of the first fitting. The opposing (proximal) end 40 of second fitting 24 is shaped for attachment to the end of a shaft segment 28, shown in phantom in Fig. 1.

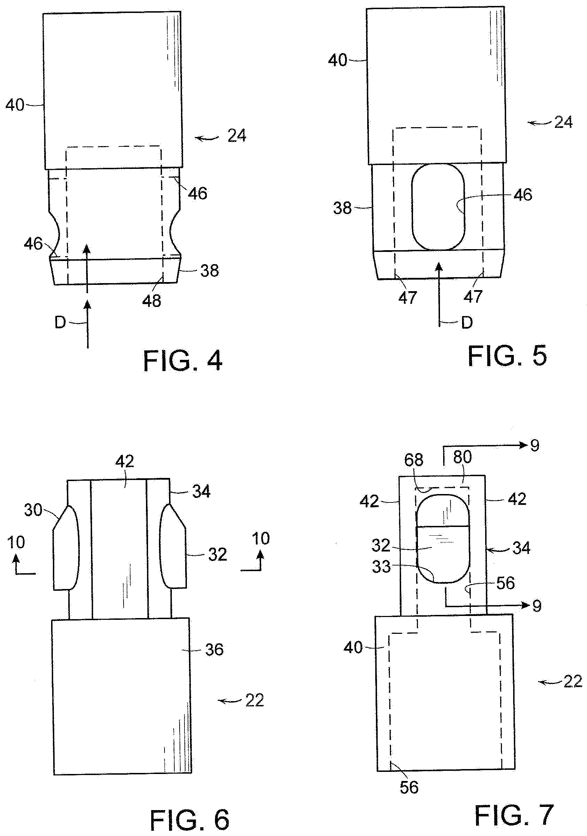

Fig 4 and Fig. 5 respectively show fitting 24 in a first side view and a second side view in which the fitting is rotated 90 degrees. Fig. 6 and Fig. 7 show fitting 22 in the same respective ways. The arrows D show how the fittings mate with each other.

Referring to Fig. 1-7 hereafter, the distal end of first fitting 22 is partly cylindrical, having opposing side external flat surfaces (flats) 42 which mate with flats 47 that are within the cavity 48 of the female stub end 38 of second fitting 24.

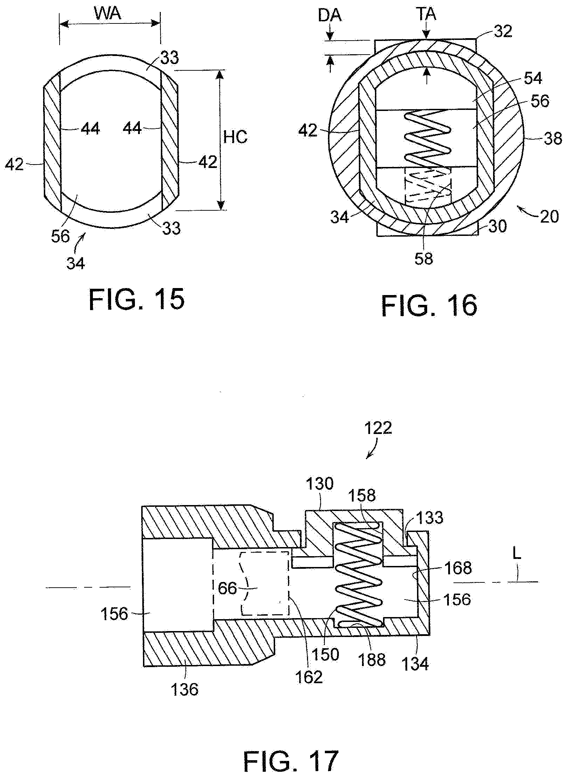

Two opposing side buttons (plungers) 30, 32 are captured within the distal end of the first fitting 22. A spring 50, described below, urges the buttons outwardly. When the fittings are mated/engaged with each other to form coupler 20 as shown in Fig. 1, the buttons extend outwardly through openings 33 in the circumferential wall of distal end 34 and through the openings 46 in the wall of distal end 38 of fitting 24. And until pressed manually inward against the force of the spring, the buttons prevent the bodies 22, 24 for disengaging. The buttons also will prevent the fittings from rotating relative to each other, if flats 42, 47 are not present. As described below in connection with Fig. 15 and Fig. 16, the buttons advantageously set within the openings 46 so they have full engagement with fitting 24.

Two diametrically opposed openings 46 connect the exterior of the fitting 24 to cavity 48 that is the interior of the sleeve-like end 38. The openings 46 are oblong and have parallel lengthwise sides that are continuations of planar surfaces 44 which are inside cavity 48.. Cavity 48 is preferably a blind hole with an opening at the proximal end of the fitting, as shown, for reasons given below; alternatively cavity 48 may be a through hole. The exterior surface of fitting 24 around the opening 46 is preferably scalloped, to facilitate manual inward pressing of the buttons. A preferred scallop has a depth which is half the wall thickness of end 38 and extends along half the length of an opening 46. Particularly when a coupling is large in diameter, scallops might be omitted.

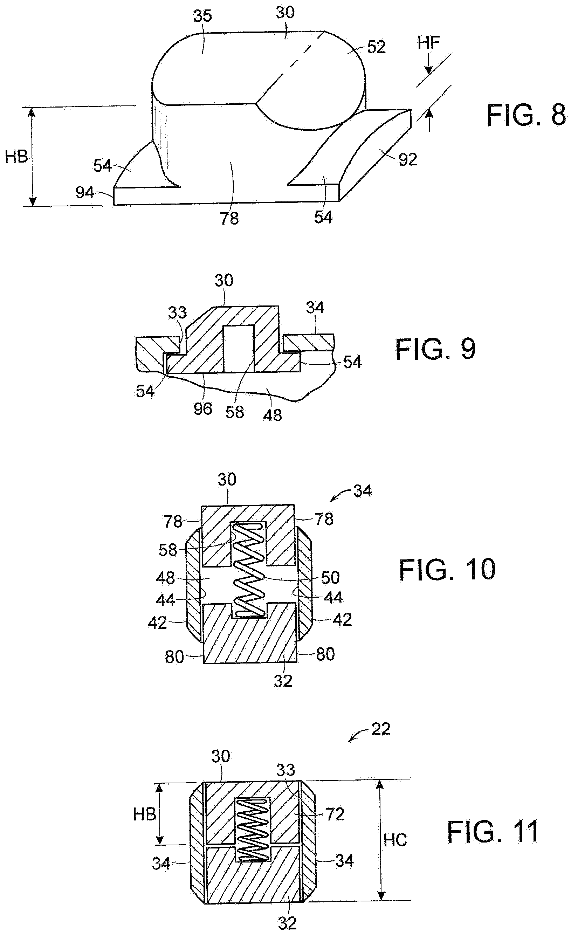

Fig. 8 shows the exterior of a typical button 30. The button has a bevel 52 at one end, as also shown in Fig. 3 and Fig. 6. The bevel faces in the distal direction so it facilitates the engagement of the fittings 22, 24 by lengthwise thrusting without requiring manual pressing of the buttons. In other embodiments, the bevel may be omitted. Button 30 is shown with a flat top 35. In other embodiments, a button may have a curved top. Engagement of the flats 42, 47 prevent relative rotation of the mated fittings.

In alternative embodiments of the invention only one flat on each fitting may be used. Other constructions which achieve the same lengthwise anti-rotation feature as do the flats may be used. For example, the male stub of fitting 22 may comprise a polygon cross section, or splines, or a raised lengthwise key, and the cavity of female end 38 of fitting 24 will be reciprocally shaped. In still the other embodiments of the invention, where having the best torsional strength is less of an issue, the end 34 and cavity 48 may be wholly cylindrical and rotation would be resisted only by the buttons.

From the Background, it will be appreciated that close tolerance fit between the mating parts of the fittings is undesirable because debris deposited in the course of chimney work could cause jamming. Since there is as a result some torsional "slop" between the mated fittings, there can be some lateral (torsional direction) force applied to the buttons. As described below a fitting of the present invention has features which provide good button function, even in such case.

The following are aims for couplers of the present invention. Buttons should project sufficient from the exterior surface of the male stub to engage well the sleeve of the female fitting, and should have a size sufficient for easy manipulation by a user's fingers.

That suggests that the buttons be large. The buttons must move easily during in-out motion; and enabling the buttons to thrust outwardly with enough force to overcome debris when it is present. That suggests a large spring. On the other hand, a coupling should be small, for small size shafts, and for economic manufacturing, the buttons should be small so that they can be inserted within the interior cavity of a fitting. It will be appreciated that there is a competition amongst these goals; achieving them becomes more difficult in smaller diameter couplers and has required work and experiment.

To summarize, a preferred two-button coupler of the present invention has advantageous features which may be used singly or in various combinations; they include:
(a) The spring is positioned within a pocket in one button; and there is preferably a recess in the other button. Preferably, the button pocket and spring are sized so, when compressed, the whole of the spring substantially fits within the pocket.
(b) The cavity of the fitting within which the buttons move in-out has opposing side lengthwise-running planar surfaces (flats) which mate with planar surfaces on the lengthwise sides of the buttons. The internal flats are parallel to the flats on the exterior of the male stub when such male stub flats are present.
(c) The buttons have substantial flanges only at the ends, for retaining the buttons within the cavity of a fitting, while the sides of the buttons are planar. Thus the sides of the buttons are guided well by the lengthwise planar surfaces within the cavity of the male stub in cooperation with the lengthwise edges of the openings through which the buttons move in and out. This provides the buttons with resistance to twisting and jamming.
(d) The lengthwise flange ends of the buttons have thick areas which are guided at one end by a distal end wall of the fitting, and at the other end by a plug set within the proximal end of the interior cavity. This enables the buttons to resist lengthwise forces and move smoothly in presence of debris or a light load.
(e) The male end of one fitting has opposing exterior parallel planar flat sides that mate with flats within the cavity of the mating female fitting. At the same time, the direction of motion of the buttons is parallel to the planes of the exterior flats. Thus, the interior flats are parallel to the exterior flats. This provides both resistance to torque and buttons having a larger height than otherwise.

Returning again to the details of coupling 20, fitting 22 has an interior cavity 56 which is preferably a blind hole, as shown in Fig. 6-7, since the wall which closes the distal end of the cavity provides a benefit with respect the in-out sliding motion of the buttons, as described further below.

Buttons 30, 32 are thrust outwardly through opposing side openings 33 in distal end 34 of fitting 22 by captured spring 50; and they may be pushed inwardly by a user's fingers. The buttons and matting parts have several distinct features, which enable the buttons to have good height HB which imparts resistance to the disruptive effect of torsional forces on the buttons.

Each preferred button 30, 32 preferably is substantially the same shape, except for the preferred difference with respect to a cavity or cavities, for receiving a spring. Referring to Fig. 8 and Fig. 9, typical button 30 has opposing end flanges 54 which have preferably curved surfaces, adapted for fitting against the interior surface of the wall of end 34 that defines cavity 56. Fig. 9 is a cross section of the end 34 of fitting 22 and shows how flanges 54 keep the button from escaping cavity 56 of end 34 through opening 33. Fig. 8 shows that typical button 30 has a height HB that is measured where the top intersects the lengthwise side edge. A button may have a curved top, along with the preferred bevel at one end. Button 30 has a flat bottom surface 92 that maximizes the height of cavity 58 into which spring 50 fits. The flat bottom surface also maximizes the height HF of the flange ends 92, 94, and thus the area of distal and proximal flange ends, which aids in resisting lengthwise thrust in either direction and provides good in-out motion of a button. See further description below.

The cross section of Fig. 10 shows that each button 30, 32 respectively has opposing lengthwise planar sides 78, 80 that extend from the base to the top. The planar sides 78, 80 mate with, and slide in and out along, the planar surfaces of opposing side flats 44 which comprise the surface of the wall within cavity 48. Such engagement of button surfaces and cavity interior surfaces provides the buttons with good resistance to jamming where there is side load, such as might result from the torsional forces and slop mentioned above. See also the description related to Fig. 15 and Fig. 16.

Fig. 10 also shows that flats 44 on the interior cavity of end 34 are parallel to flats 42 on the exterior surface of end 34. That feature enables the interior flats 44 to be of greater height (as portrayed in Fig. 10) than they could have been, if the interior cavity and the motion of the buttons was alternatively in the direction of the flat surfaces 42, i.e., if the motion was left-right in Fig. 10. This feature is particularly useful in small diameter couplings.

Coil spring 50 has a variable length; in use it is compressed between the buttons and presses the bases of each button outwardly to the maximum permitted by the flanges, as shown in Fig. 10, so they can pass into openings 46 of the wall of the female cavity end of mated fitting 24. When the buttons are pressed inwardly, they compress the spring.

Spring 50 sets within the deep cylindrical cavity 58 of button 30; the cavity is of sufficient depth to receive the whole, or at least substantially the whole (90% or more), of the length of spring 50 when the spring is compressed. As described below, this enables having buttons with exceptionally good height to be positioned within a small fitting 22, while at the same time it enables having a spring which has adequate size and gage to make the buttons "snap" outwardly, even in the presence of debris.

Button 32 preferably has a shallow cylindrical cavity 72 which helps keep the coil spring in place. That recess may be omitted in the generality of the invention. Alternatively, button 32 may have other spring-end-engaging means, such as a small protuberance, although that would inhibit a preferred method of assembly of fitting 22, as described below. Another kind of compression spring may optionally be used in substitution of a coil spring. For example, leaf springs, torsional springs, elastomer cushion springs, or gas filled springs may be used, with one button having a recess to receive the alternative spring.

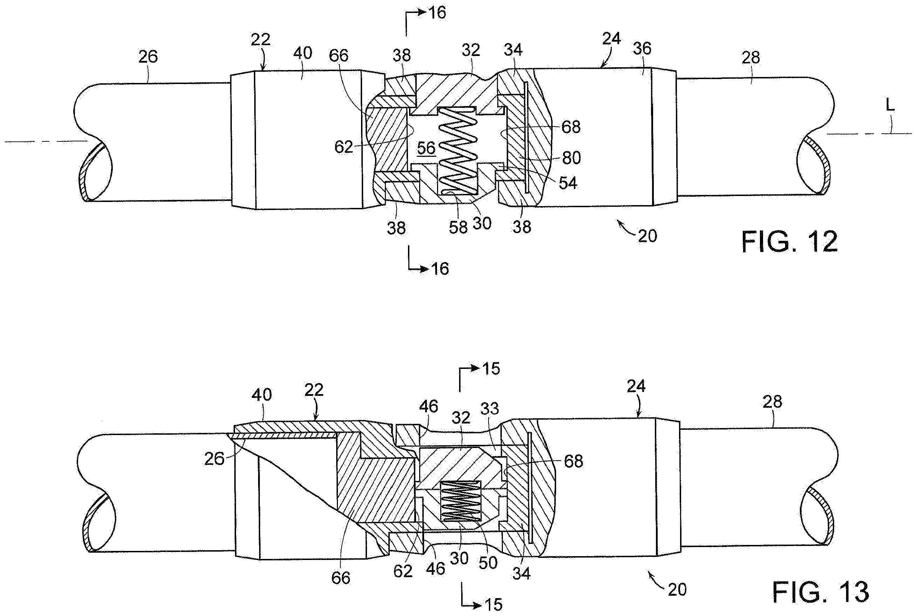

Fig. 12 and Fig. 13 are side views, with partial cross sectioning, of a coupling 20 of the present invention in combination with two end portions of shafts 26, 28 which the coupling connects for transmitting axial and torsional loads. Fig. 12 shows the buttons extended outwardly, so they engage the sleeve-like female end 38 of fitting 22. Fig. 13 shows the buttons pressed inwardly, so the fittings can be separated, to disconnect the coupling.

The shaft segments 26, 28 may be solid or hollow (as shown) and will attach to each fitting at ends 36, 40 in a choice of ways. For example the shaft-attached end of a fitting may be a sleeve like portion (as shown for end 40 in Fig. 13), and the shaft may be secured within the sleeve by means of a pin, screw, adhesive, or crimping. In another example, the fitting may have a proximal end which is reduced in diameter, or like a plug, that inserts within the lengthwise cavity of a hollow shaft.

Fig. 12-13 show that male stub end 34 comprises and end wall 80 that closes the cavity 56 at the distal end of the fitting 24. Wall 80 provides a planar surface 68 inside cavity 56, for guiding the lengthwise ends of the flanges 54 of the two buttons as they move radially in and out. Thus, the transverse-running surface 68 provides the buttons with resistance to movement when there is lengthwise thrusting apart of the coupling. That construction compares to a coupling having no surface 68, where the buttons only have support that is provided by the lengthwise ends of openings 33.

As described below, the proximal end of the fitting cavity 56 is preferably open, at least during the manufacturing process, to enable positioning of the buttons within the fitting. Fig. 12 shows plug 66 which has been optionally pushed into the proximal end of cavity 56 after placement of the buttons. The end of plug 66 provides a planar transverse-running support surface 62 for the proximal ends of the buttons 30, 32. Surface 62 facilitates the in-out motion of buttons, in cooperation with surface 68. Plug 66 may be held in place by hollow shaft 26, as illustrated. Other known means of securing the plug may be utilized. When a shaft 26 is solid, compared to the hollow shafts 26, 28 which are shown, a shaft end may be shaped to function as plug 66 and provide the surface 62. In an alternate embodiment of the invention, if may be sufficient to have no plug 66 and thus no surface 62, and to have only surface 68, with respect to guiding in-out motion against longitudinal forces on the coupler.

When the buttons are depressed, fitting 22 and fitting 24 may be disengaged. As illustrated in Fig. 13, as a result of typical manual squeezing action by a user's fingers, the buttons will be naturally centered within the fitting 22. In smaller diameter couplers especially, the bottom surfaces of depressed buttons will contact each other, or come very close to being in contact, to substantially the same effect.

Fig. 15 is a cross section through the end 34 of fitting 22, shown in Fig. 2. Fig. 16 is a cross section through the coupling 20 in Fig. 12-13, showing how the fittings 22, 24 engage by means of outwardly-thrust buttons 30, 32. Fig. 15 shows that internal flats 44 are integral with the wall of end 34 and how they both are parallel to the internal surface flats 44.

When the fittings 22, 24 are mated so the end 34 fits within the cavity of end 38, as shown in Fig. 16, buttons 30, 32 project through the radial thickness TA of the adjacent circumferentially curved walls of end 38 and 34 (with addition of such clearance space as is present between the walls to enable good slip fit). The lateral edge of each button projects beyond the circumferentially curved exterior surface of the female stub end 38 of fitting 24 by a dimension DA. That extension and engagement compares with what may be found in prior art couplers, where there is a button that projects from a flat surface of the male stub (e.g., from flat 42). The good engagement of the whole of the button with the whole of the opening 46 in the end 38 makes coupler 20 less prone to inadvertent disengagement during rough handling.

The question of how the buttons are put in place within the body of fitting 22 is present. In one approach, not illustrated, the distal end portion of the fitting might be made of multiple pieces. For example, the end wall could be a cover which is threaded, welded, or otherwise attached to the circumferential side wall of the end, to provide a closable access opening. Preferably, fitting 22 and the buttons are configured in accord with the drawings here, and the fitting may be constructed as now described.

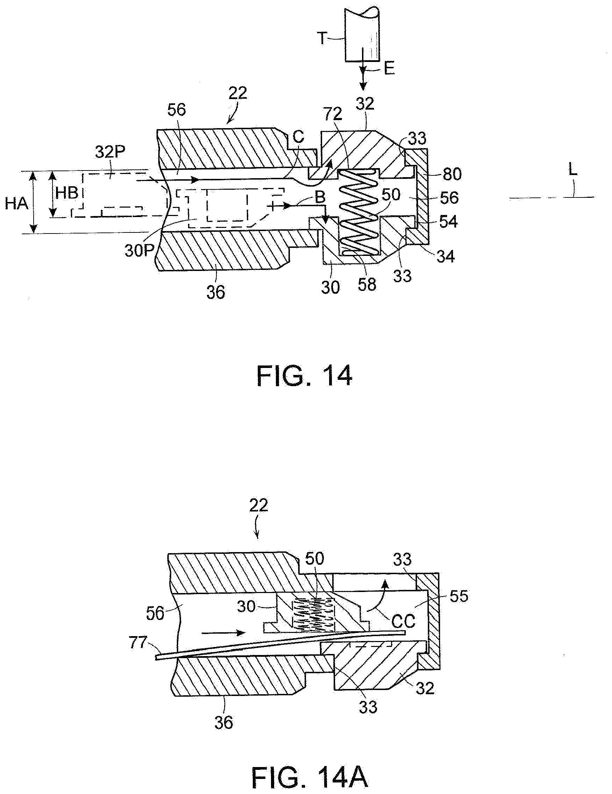

Fig. 14 is of the same kind of drawing as Fig. 12, with the omission of fitting 24, i.e. it is a lengthwise cross section of the body of fitting 22, showing the buttons and spring without sectioning. Fig. 14 illustrates how the unique features of the interior 56 and the buttons enable the buttons to be inserted into a fitting 22 which has a wall 80 that closes off the end of cavity 56. First, the button 30 having the deep bore for the coil spring 50 is slid into the open (proximal) end of cavity 56. As shown in Fig.14 by phantom button 30P and arrow B, button 30P is moved lengthwise along cavity 56, until it reaches lower opening 33 and drops into the opening. Button 30 is shown in place as a result of that step, in Fig. 14. Spring 50 is either pressed into cylindrical cavity (pocket) 58 at the beginning of the foregoing step, or it is dropped through the second opening 33 into the cavity 58, to the same effect.

Then, spring 50 is pressed downwardly by tool T and shown by the associated arrow E. While the spring is being held compressed in cavity 58, the second button 32 is moved into position, as indicated by phantom button 32P and the associated arrow C in Fig. 14. Button 32 is slid onto and over the flange-bottom of button 30 and the spring is in its compressed position. Tool T is simultaneously slid laterally out of the way as button 32 slides over the compressed spring. Then tool T is withdrawn. The second button 32 will then be pushed by the spring 50 upwardly into upper opening 33, as shown in Fig. 14. It will be appreciated from the foregoing why it is quite desirable that the cylindrical cavity 58 of button 30 should be sufficient in depth to hold the whole of the spring. Less preferably, a small portion, e.g., 10% or less, of the spring may project from the cavity 58, and the invention can still be carried out. As explained above, having a cavity 58 of the foregoing depths is also important regardless of the advantage of the assembly method which has been just described; the deep cavity enables a spring which is stronger and longer, and therefore better.

After the buttons are put in place, with reference now to Fig. 12, plug 60 may be pushed into place from the proximal end of fitting 22, to seal off cavity 56. Plug 60 may be held in place by press fit, tack weld, set screw, adhesive, or other means.

Because spring 50 is able to be compressed into the cavity 58 of button 30, each button has a maximized height HB and thus will be in good contact with the interior sidewalls of cavity 56 during in-out movement, and thus the tendency for a button to wobble is minimized.

With reference to Fig. 8, 11, 13 and 14, preferably the buttons 30, 32 each have a height dimension HB which is about half of the height HC of the space in which the buttons travel, measured at the button lengthwise edge location. When the buttons are fully pushed inwardly, the bases of the buttons will contact each other, as shown in Fig. 11.

With reference to Fig. 14: Preferably, the height HA of the proximal end opening of cavity 56 is greater than the height HB of a button but less than twice the dimension HC (shown in Fig. 11). Considering the button 32P, a button might have a height HB which is as large as the dimension HA, less the thickness of the flange of a button.

The method of assembling a single button fitting like fitting 122 shown in Fig. 17 is similar to that which has been just described for the two-button fitting, with the obvious difference. In short, the button is slid into the cavity 156 from the proximal end of the fitting, while spring 150 is compressed into cavity 158, and after the button has been urged by the spring into the opening 133, plug 66 is inserted to provide guiding surface 162.

The method of installing buttons may be carried out in an alternative procedure as follows, with reference to Fig. 14a which is of the same kind as Fig. 14. The button 32 is first slid into the cavity 56 through the opening in the proximal end and put into one of the openings 33 in the distal end of fitting 22. Then a ramp 77, such as a thin piece of metal, is inserted in the proximal end and laid on top of button 32. The spring 50 is compressed within the cavity in the base of button 30 by pressing the button downwardly on the ramp surface while moving button 30 along the ramp, into the cavity 56 and into the second opening 33 as indicated by the arrows CC, at which time the spring expands. Then the ramp is removed by pulling lengthwise.

With reference to Fig. 14A, and in contrast to Fig. 14. When buttons are installed in accord with Fig. 14A, the (maximum) height HB of a button is about equal to one half of the height HA of the opening 56 with the thickness of the ramp being taken into account.

height HA of the proximal end opening of cavity 56 is greater than the height HB of a button but less than twice the dimension HC (shown in Fig. 11). Considering the button 32P, a button might have a height HB which is as large as the dimension HA, less the thickness of the flange of a button

While couplers having two buttons are desirable for the reasons stated, in very small couplers it can become difficult to fit the two buttons in a coupler while also having buttons of sufficient size to manipulate manually. Fig. 17 shows another embodiment of fitting 122 which may be used with an unshown fitting that is like fitting 24, but which has only one opening 46. Fitting 122 comprises distal end 134, proximal end 156, and internal cavity 156. Button 130 moves in-out within cavity, passing through wall opening 133. Spring 150 fits within cavity 158 of button 130 and is stabilized in position by small recess 188 on the interior of the wall which comprises end 134. As with the two-button couplers, preferably the depth of cavity 158 is sufficient substantially to receive a fully compressed spring 150, for achieving the same kinds of benefits as described above for coupler 20, with respect to spring length and assembly.

Other than having only one button, a preferred coupler comprising fitting 122 has features similar to those described for fitting 24 of coupler 20, and its variations. For example, the button 130 of a preferred one-button coupler fits within the interior cavity 156 of fitting 122, and is guided during in-out motion by surfaces 168 and 162 at the distal and proximal ends of the button, and by side flats within cavity 156 that contact the flat sides of the button, in the same way as has been described for button 32. And the flats on the interior and exterior of the distal end of fitting 122 are parallel to each other.

A coupler of the present invention has unique and advantageous features: The coupler has buttons having good amounts of outward projection, for good engagement when the fittings of the coupler are mated. The buttons are strong where they engage both the mating female part and the interior of the male part. The buttons are of sufficient size to enable good finger manipulation, especially in small diameter couplers. The spring is strong and the buttons move in-and out even when there is debris or loads on the coupling.

The invention has been described and illustrated with respect to several embodiments. Any use of words such as "preferred" and variations suggest a feature or combination which is desirable but which is not necessarily mandatory. Thus embodiments lacking any such preferred feature or combination may be within the scope of the claims which follow.

## Claims

1. A coupler (20), for releasably interconnecting two shafts (26, 28), having a length and a diameter, comprising:
(a) a first fitting (22) having
a proximal end shaped for attachment to a first shaft,
a distal end having an exterior surface, the end configured for releasable engagement with a second fitting, the end having a cavity (56) with at least an opening at the proximal end, and two opposing side openings (46) connecting the cavity to the exterior surface, each side opening having parallel opposing lengthwise edges, opposing side lengthwise planar sidewalls (44) within the cavity, wherein each planar sidewall is aligned with and continuous with the lengthwise edges of each of the side openings;
a first button (30) and a second button (32), contained within the cavity, each button
movable inwardly and outwardly through one of said openings,
each button having
a top (35),
a base (98) facing toward the interior of the cavity,
a distal end flange (92) and an opposing proximal end flange (94), for preventing the base of the button from exiting the cavity through the opening,
opposing lengthwise parallel planar side surfaces (78) extending from the base to the top,
wherein the top of each button projects from the exterior surface of the fitting when the button moves outwardly within a said side opening;
the first button having a cavity in the base;
a compression spring (50), having a length, in contact with the opposing bases of the buttons, for urging the buttons outwardly through the openings,
(b) a second fitting (24) having an exterior surface,
a proximal end shaped for attachment to a second shaft, and
a distal end having a cavity (48) with an opening at the distal end, two opposing side openings that connect the cavity to the exterior surface of the second fitting, wherein each side opening has parallel opposing lengthwise sides (47), and wherein the cavity has an interior surface shaped to mate lengthwise with the exterior surface of the first fitting;
wherein, when the first fitting is mated with the second fitting to form a coupler, the buttons are movable inwardly and outwardly within the side openings of the second fitting, to enable lengthwise and torsional engagement and alternately disengagement of the first and second fittings **characterised by** having a depth of the cavity (56) in the base of the first button which is sufficient to receive substantially the whole of the spring when the spring (50) is fully compressed;
wherein the bases of the buttons contact each other when the buttons are pushed inwardly sufficiently to enable disengagement of the fittings;.

2. The coupler of claim 1 wherein the exterior surface of the distal end of the first fitting has at least one lengthwise feature (42) for preventing rotation of the distal end of the first fitting within the cavity of the second fitting.

3. The coupler of claim 2 wherein said at least one lengthwise feature is a flat that is parallel to the lengthwise planar surfaces within the cavity (56) of the first fitting.

4. The coupler of claim 3 wherein said at least one lengthwise feature is a pair of flat surfaces that are parallel to the lengthwise planar side surfaces within the cavity (56) of the first fitting.

5. The coupler of claim 1 wherein the bases of the first button and second are flat, and wherein the first fitting (22) further comprises:
a planar surface at the distal end of the cavity (56), for guiding the distal end flange of each button during in and out movement of the button; and,
a plug (66), positioned within the cavity between the distal and proximal ends of the fitting, the distal end of the plug providing a planar surface (62) for guiding the proximal end flange of each button during in and out movement of the button.

6. The coupler of claim 1 wherein the second button (32) has a recess (72) in the base, for receiving the second end of the spring (50), the recess being small in depth compared to the cavity in the first button base.

7. The coupler of claim 1, wherein when the fittings (22,24) are mated and each button has moved outwardly to the extent that said button flanges contact the interior wall surface, a portion of the top of each button at the location of said lengthwise planar side surface projects beyond the exterior surface of second fitting (24).

8. The coupler of claim 1 wherein the compression spring (50) is a coil spring.

9. A method of assembling the first fitting (22) of the coupler of claim 1 which comprises:
sliding the first button (30) lengthwise within the cavity (56) of the first fitting from said proximal end toward said distal end;
positioning the first button in a first side opening;
placing a spring (50) in the cavity in the base of the first button either before or after said positioning step;
compressing the spring substantially fully within the cavity in the base of the first button;
then sliding the second bottom (32) lengthwise within the cavity of the first fitting from said proximal end toward said distal end, so the base of the second button overlaps the base of the first button and the compressed spring; and
then allowing the second button to move outwardly through the second side opening; wherein the height of each button and the dimension of said cavity are selected to enable the overlaps of the bases.

## Patentansprüche

1. Koppler (20) zum lösbaren Verbinden zweier Schäfte (26, 28), der eine Länge und einen Durchmesser aufweist, umfassend:
(a) ein erstes Anschlussstück (22), aufweisend ein proximales Ende, das zur Anbringung an einem ersten Schaft geformt ist,
ein distales Ende, das eine Außenfläche aufweist, wobei das Ende für einen lösbaren Eingriff mit einem zweiten Anschlussstück konfiguriert ist, wobei das Ende einen Hohlraum (56) mit mindestens einer Öffnung an dem proximalen Ende und zwei gegenüberliegende Seitenöffnungen (46) aufweist, die den Hohlraum mit der Außenfläche verbinden, wobei jede Seitenöffnung parallele gegenüberliegende längs verlaufende Kanten, gegenüberliegende seitlich längs verlaufende ebene Seitenwände (44) innerhalb des Hohlraums aufweist, wobei jede ebene Seitenwand mit den längs verlaufenden Kanten jeder der Seitenöffnungen ausgerichtet und durchgehend ist;
eine erste Taste (30) und eine zweite Taste (32), die in dem Hohlraum enthalten sind, wobei jede Taste durch eine der Öffnungen nach innen und nach außen bewegbar ist,
wobei jede Taste
eine Oberseite (35),
eine Basis (98), die dem Inneren des Hohlraums zugewandt ist, einen distalen Endflansch (92) und einen gegenüberliegenden proximalen Endflansch (94) zum Verhindern, dass die Basis der Taste durch die Öffnung aus dem Hohlraum austritt, gegenüberliegende längs verlaufende parallele ebene Seitenflächen (78) aufweist, die sich von der Basis zu der Oberseite erstrecken,
wobei die Oberseite jeder Taste von der Außenfläche des Anschlussstückes vorsteht, wenn sich die Taste innerhalb einer Seitenöffnung nach außen bewegt;
wobei die erste Taste einen Hohlraum in der Basis aufweist;
eine Druckfeder (50), die eine Länge aufweist und in Kontakt mit den gegenüberliegenden Basen der Tasten steht, um die Tasten nach außen durch die Öffnungen zu drücken,
(b) ein zweites Anschlussstück (24), aufweisend
eine Außenfläche,
ein proximales Ende, das zur Anbringung an einem zweiten Schaft geformt ist, und
ein distales Ende, das einen Hohlraum (48) mit einer Öffnung an dem distalen Ende, zwei gegenüberliegende Seitenöffnungen, die den Hohlraum mit der Außenfläche des zweiten Anschlussstückes verbinden, aufweist, wobei jede Seitenöffnung parallele gegenüberliegende längs verlaufende Seiten (47) aufweist und wobei der Hohlraum eine Innenfläche aufweist, die derart geformt ist, dass sie in Längsrichtung mit der Außenfläche des ersten Anschlussstückes zusammenpasst;
wobei, wenn das erste Anschlussstück mit dem zweiten Anschlussstück zusammengefügt wird, um einen Koppler zu bilden, die Tasten innerhalb der Seitenöffnungen des zweiten Anschlussstückes nach innen und außen bewegbar sind, um einen Längs- und Torsionseingriff und abwechselnd ein Lösen des ersten und des zweiten Anschlussstückes zu ermöglichen;
**gekennzeichnet durch** Aufweisen einer Tiefe des Hohlraums (56) in der Basis der ersten Taste, die ausreicht, um im Wesentlichen die gesamte Feder aufzunehmen, wenn die Feder (50) vollständig zusammengedrückt ist;
wobei die Basen der Tasten in Kontakt miteinander stehen, wenn die Tasten ausreichend nach innen gedrückt werden, um ein Lösen der Anschlussstücke zu ermöglichen.

2. Koppler nach Anspruch 1, wobei die Außenfläche des distalen Endes des ersten Anschlussstückes mindestens ein längs verlaufendes Merkmal (42) zum Verhindern einer Drehung des distalen Endes des ersten Anschlussstückes innerhalb des Hohlraums des zweiten Anschlussstückes aufweist.

3. Koppler nach Anspruch 2, wobei das mindestens eine längs verlaufende Merkmal eine Abflachung ist, die parallel zu den längs verlaufenden ebenen Flächen innerhalb des Hohlraums (56) des ersten Anschlussstückes ist.

4. Koppler nach Anspruch 3, wobei das mindestens eine längs verlaufende Merkmal ein Paar flacher Flächen ist, das parallel zu den längs verlaufenden ebenen Seitenflächen innerhalb des Hohlraums (56) des ersten Anschlussstückes ist.

5. Koppler nach Anspruch 1, wobei die Basen der ersten Taste und der zweiten Taste flach sind und wobei das erste Anschlussstück (22) ferner Folgendes umfasst:
eine ebene Fläche an dem distalen Ende des Hohlraums (56) zum Führen des distalen Endflansches jeder Taste während der hinein- und herausgehenden Bewegung der Taste; und
einen Stopfen (66), der innerhalb des Hohlraums zwischen dem distalen und dem proximalen Ende des Anschlussstückes positioniert ist, wobei das distale Ende des Stopfens eine ebene Fläche (62) zum Führen des proximalen Endflansches jeder Taste während der hinein- und herausgehenden Bewegung der Taste bereitstellt.

6. Koppler nach Anspruch 1, wobei die zweite Taste (32) eine Aussparung (72) in der Basis zum Aufnehmen des zweiten Endes der Feder (50) aufweist,
wobei die Aussparung im Vergleich zu dem Hohlraum in der ersten Tastenbasis eine geringe Tiefe aufweist.

7. Koppler nach Anspruch 1, wobei, wenn die Anschlussstücke (22, 24) zusammengefügt sind und sich jede Taste so weit nach außen bewegt hat, dass die Tastenflansche mit der Innenwandfläche in Kontakt stehen, ein Abschnitt der Oberseite jeder Taste an der Stelle der längs verlaufenden ebenen Seitenfläche über die Außenfläche des zweiten Anschlussstückes (24) hinaus vorsteht.

8. Koppler nach Anspruch 1, wobei die Druckfeder (50) eine Schraubenfeder ist.

9. Verfahren zum Montieren des ersten Anschlussstückes (22) des Kopplers nach Anspruch 1, das Folgendes umfasst:
Schieben der ersten Taste (30) in Längsrichtung innerhalb des Hohlraums (56) des ersten Anschlussstückes von dem proximalen Ende in Richtung des distalen Endes;
Positionieren der ersten Taste in einer ersten Seitenöffnung;
Platzieren einer Feder (50) in dem Hohlraum in der Basis der ersten Taste entweder vor oder nach dem Positionierungsschritt;
im Wesentlichen vollständiges Zusammendrücken der Feder innerhalb des Hohlraums in der Basis der ersten Taste;
dann Schieben des zweiten Bodens (32) in Längsrichtung innerhalb des Hohlraums des ersten Anschlussstückes von dem proximalen Ende in Richtung des distalen Endes, sodass die Basis der zweiten Taste die Basis der ersten Taste und die zusammengedrückte Feder überlappt; und
dann Zulassen, dass sich die zweite Taste durch die zweite Seitenöffnung nach außen bewegt; wobei die Höhe jeder Taste und die Abmessung des Hohlraums ausgewählt sind, um die Überlappungen der Basen zu ermöglichen.

## Revendications

1. Coupleur (20), pour interconnecter de manière amovible deux arbres (26, 28), ayant une longueur et un diamètre, comprenant :
(a) un premier raccord (22) ayant
une extrémité proximale formée pour être fixée à un premier arbre,
une extrémité distale ayant une surface extérieure, l'extrémité étant conçue pour une mise en prise amovible avec un second raccord, l'extrémité ayant une cavité (56) avec au moins une ouverture au niveau de l'extrémité proximale, et deux ouvertures latérales opposées (46) reliant la cavité à la surface extérieure, chaque ouverture latérale ayant des bords longitudinaux opposés parallèles, des parois latérales planes longitudinales opposées (44) à l'intérieur de la cavité, dans lequel chaque paroi latérale plane est alignée et continue avec les bords longitudinaux de chacune des ouvertures latérales ; un premier bouton (30) et un second bouton (32), contenus à l'intérieur de la cavité, chaque bouton pouvant se déplacer vers l'intérieur et vers l'extérieur à travers l'une desdites ouvertures,
chaque bouton ayant
un sommet (35),
une base (98) orientée vers l'intérieur de la cavité,
une bride d'extrémité distale (92) et une bride d'extrémité proximale opposée (94), pour empêcher la base du bouton de sortir de la cavité à travers l'ouverture,
des surfaces latérales planes parallèles longitudinalement opposées (78) s'étendant depuis la base vers le sommet,
dans lequel le sommet de chaque bouton fait saillie depuis la surface extérieure du raccord lorsque le bouton se déplace vers l'extérieur à l'intérieur d'une dite ouverture latérale ;
le premier bouton ayant une cavité dans la base ;
un ressort de compression (50), ayant une longueur, en contact avec les bases opposées des boutons, pour pousser les boutons vers l'extérieur à travers les ouvertures,
(b) un second raccord (24) ayant une surface extérieure,
une extrémité proximale formée pour être fixée à un second arbre, et
une extrémité distale ayant une cavité (48) avec une ouverture au niveau de l'extrémité distale, deux ouvertures latérales opposées qui relient la cavité à la surface extérieure du second raccord, dans lequel chaque ouverture latérale a des côtés longitudinaux opposés parallèles (47), et dans lequel la cavité a une surface intérieure formée pour s'accoupler longitudinalement avec la surface extérieure du premier raccord ;
dans lequel, lorsque le premier raccord est accouplé avec le second raccord pour former un coupleur, les boutons sont mobiles vers l'intérieur et vers l'extérieur à l'intérieur des ouvertures latérales du second raccord, pour permettre une mise en prise longitudinale et en torsion et alternativement une libération des premier et second raccords
**caractérisé par** le fait d'avoir une profondeur de la cavité (56) dans la base du premier bouton qui est suffisante pour recevoir sensiblement la totalité du ressort lorsque le ressort (50) est complètement comprimé ;
dans lequel les bases des boutons entrent en contact lorsque les boutons sont suffisamment poussés vers l'intérieur pour permettre une libération des raccords ;

2. Coupleur selon la revendication 1, dans lequel la surface extérieure de l'extrémité distale du premier raccord a au moins un élément longitudinal (42) pour empêcher une rotation de l'extrémité distale du premier raccord à l'intérieur de la cavité du second raccord.

3. Coupleur selon la revendication 2, dans lequel ledit au moins un élément longitudinal est une surface plate qui est parallèle aux surfaces planes longitudinales à l'intérieur de la cavité (56) du premier raccord.

4. Coupleur selon la revendication 3, dans lequel ledit au moins un élément longitudinal est une paire de surfaces plates qui sont parallèles aux surfaces latérales planes longitudinales à l'intérieur de la cavité (56) du premier raccord.

5. Coupleur selon la revendication 1, dans lequel les bases du premier bouton et du second sont plates, et dans lequel le premier raccord (22) comprend en outre :
une surface plane au niveau de l'extrémité distale de la cavité (56), pour guider la bride d'extrémité distale de chaque bouton pendant un mouvement d'entrée et de sortie du bouton ; et,
un bouchon (66), positionné à l'intérieur de la cavité entre les extrémités distale et proximale du raccord, l'extrémité distale du bouchon fournissant une surface plane (62) pour guider la bride d'extrémité proximale de chaque bouton pendant un mouvement d'entrée et de sortie du bouton.

6. Coupleur selon la revendication 1, dans lequel le second bouton (32) a un évidement (72) dans la base, pour recevoir la seconde extrémité du ressort (50), l'évidement étant de faible profondeur par rapport à la cavité dans la première base de bouton.

7. Coupleur selon la revendication 1, dans lequel lorsque les raccords (22, 24) sont accouplés et que chaque bouton s'est déplacé vers l'extérieur dans la mesure où lesdites brides de bouton entrent en contact avec la surface de paroi intérieure, une partie du sommet de chaque bouton au niveau de l'emplacement de ladite surface latérale plane longitudinale fait saillie au-delà de la surface extérieure du second raccord (24).

8. Coupleur selon la revendication 1, dans lequel le ressort de compression (50) est un ressort hélicoïdal.

9. Procédé d'assemblage du premier raccord (22) du coupleur selon la revendication 1 qui comprend :
le coulissement du premier bouton (30) longitudinalement à l'intérieur de la cavité (56) du premier raccord depuis ladite extrémité proximale vers ladite extrémité distale ;
le positionnement du premier bouton dans une première ouverture latérale ;
le placement d'un ressort (50) dans la cavité dans la base du premier bouton soit avant soit après ladite étape de positionnement ;
la compression du ressort sensiblement complètement à l'intérieur de la cavité dans la base du premier bouton ;
puis le coulissement du second fond (32) longitudinalement à l'intérieur de la cavité du premier raccord depuis ladite extrémité proximale vers ladite extrémité distale, de sorte que la base du second bouton chevauche la base du premier bouton et le ressort comprimé ; et
le fait de permettre ensuite au second bouton de se déplacer vers l'extérieur à travers la seconde ouverture latérale ; dans lequel la hauteur de chaque bouton et la dimension de ladite cavité sont choisies pour permettre les chevauchements des bases.
